# EUROPÄISCHE PATENTANMELDUNG

(11) **EP 1 217 813 A1**
(43) Veröffentlichungstag der Anmeldung: **26.06.2002**
(21) Anmeldenummer: 01130462.3
(22) Anmeldetag: 20.12.2001
(51) Int. Cl.: H04M 3/42

(54) **Rechnergesteuertes Vermittlungssystem mit Leistungsmerkmalen und Verfahren zur Steuerung und Nutzung von Leistungsmerkmalen**

(30) Priorität: 21.12.2000 DE 10064040
(71) Anmelder: Tenovis GmbH & Co. KG, 60326 Frankfurt am Main (DE)
(72) Erfinder: Arndgen, Hans-Jürgen, 65439 Flörsheim (DE)
(74) Vertreter: Bohnenberger, Johannes, Dr.

(57) **Zusammenfassung**

Die Erfindung betrifft ein rechnergestütztes Vermittlungssystem (1) für Telefon- und Datenkommunikation mit Leistungsmerkmalen, zu deren Steuerung und/oder Nutzung ein außerhalb des Vermittlungssystems angeordnetes Kommunikationsendgerät (26 - 28) auf in einem Speicher (4) abgespeicherte Steuerinformationsdaten und/oder Leistungsmerkmalsdaten zugreift, und einer Schnittstelle (3, 6, 7) zum Zugriff auf diese Daten durch das Kommunikationsendgerät (26 - 28), wobei die Schnittstelle (3, 6, 7) Einrichtungen für eine Nachrichtenübermittlung zu und/oder von dem Kommunikationsendgerät (26 - 28) durch Sprachübertragung beinhaltet. Desweiteren betrifft die Erfindung ein Verfahren zur Steuerung und/oder Nutzung von Leistungsmerkmalen des rechnergesteuerten Vermittlungssystems.

## Beschreibung

Die Erfindung betrifft ein rechnersteuertes Vermittlungssystem für Telefon- und Datenkommunikation mit Leistungsmerkmalen sowie ein Verfahren zur Steuerung und/oder Nutzung von Leistungsmerkmalen eines solchen rechnergesteuerten Vermittlungssystems gemäß den Oberbegriffen der Ansprüche 1 und 4.

Rechnergesteuerte Vermittlungssysteme, wie beispielsweise programmgesteuerte Nebenstellenanlagen (PABX: "Private Automatic Branch Exchange") für die lokale - analoge oder digitale - Telefon- und Datenkommunikation verfügen über Komponenten, die den Anschluß von analogen und digitalen Endgeräten (Terminals) ermöglichen. Aufgrund der heutzutage üblichen Rechnerstruktur einer solchen PABX-Anlage kann den Endgeräten eine große Zahl von Leistungsmerkmalen zur Verfügung gestellt werden. Derartige Leistungsmerkmale betreffen insbesondere Serviceleistungen im Bereich des Telefonverkehrs mit analogen und digitalen (ISDN) Amtsanschlüssen. So können beispielsweise verschiedene Varianten der Zustellung bzw. Weiterleitung ankommender Anrufe zu den an das Vermittlungssystem angeschlossenen Endgeräten, wie Sammelanschlüsse, Nachtschaltungen, Rufweiterleitungen, Rufdopplungen, Abfragestellen etc., als Leistungsmerkmale implementiert werden. Weiterhin ist denkbar, daß das Führen von Anruflisten, in denen die Telefonnummern von Anrufern enthalten sind, deren Anruf nicht entgegengenommen werden konnte, sowie verschiedene Telefonbuchfunktionen und Notizbuchfunktionen als Leistungsmerkmale von einem Teilnehmer an einem Endgerät genutzt werden.

Typisch für derartige Leistungsmerkmale ist es, daß zu ihrer Realisierung in dem Vermittlungssystem eine spezielle Software abgearbeitet wird, welche im allgemeinen die dafür zugeordneten Parameter (Steuerinformationsdaten/Leistungsmerkmalsdaten) nutzt, die in einem Speicher des Vermittlungssystems für das jeweilige Leistungsmerkmal eindeutig adressierbar abgelegt sind. Die Verwaltung dieser Daten erfolgt ebenso durch eine dafür eingerichtete Software.

Für die Benutzung und Konfiguration der Leistungsmerkmale ist es erforderlich, die zugehörigen Parameter anzuzeigen, zu ändern und/oder die entsprechende Funktion des Leistungsmerkmals zu aktivieren bzw. zu deaktivieren. Der hierfür erforderliche Zugriff auf einen Speicher, in welchem die zugehörigen Steuerinformationsdaten/Leistungsmerkmalsdaten abgespeichert sind, erfolgt in der Regel über die Endgeräte des Vermittlungssystems. Für einen derartigen Zugriff auf den Speicher wird ein proprietäres Übertragungsprotokoll genutzt.

Möchte nun ein Teilnehmer eines Endgerätes beispielsweise auf die Anrufliste der Anrufe, die er nicht beantwortet hat und die in dem Speicher der PABX-Anlage abgespeichert sind, zugreifen, so wendet der Teilnehmer dafür ein bestimmtes Verfahren an seinem Endgerät an. Dieses Verfahren kann die Eingabe einer definierten Zeichenfolge über die Tastatur beinhalten. Sobald die eingegebene und übertragene Zeichenfolge in den Wirkungsbereich des proprietären Übertragungsprotokolls gelangt, wird dieses Protokoll einen Zugriff auf den Speicher der Steuerinformationsdaten/Leistungsmerkmalsdaten ermöglichen. Die Funktionsweise des proprietären Übertragungsprotokolls basiert typischerweise auf Zeichen nach dem Mehrfrequenzverfahren (MFV) oder auf ISDN-Meldungen. Sobald der Zugriff auf die in dem Speicher abgelegten Daten zustande gekommen ist, werden die Einträge der Anrufliste dem Teilnehmer auf seinem Endgerät angezeigt, und der Teilnehmer hat nun die Möglichkeit, die Listeneinträge zu löschen oder auch den jeweiligen Anrufer mittels der PABX-Anlage zurückzurufen.

Wenn nun das Kommunikationsendgerät außerhalb der PABX-Anlage angeordnet ist, so ist ein Zugriff auf die in dem Speicher abgespeicherten Steuerinformationsdaten/Leistungsmerkmalsdaten bisher nur bedingt möglich gewesen. So kann beispielsweise der Benutzer eines Mobilfunktelefons durch Eingeben einer vorbestimmten Ziffernfolge den Inhalt eines in der PABX zentral angeordneten E-Mail-Speichers abfragen. Die Eingabe einer derartigen Ziffernfolge ist nicht nur zeitaufwendig, sondern erfordert auch das Benutzen der oft sehr kleinen und umständlich zu bedienenden Tastatur sowie der Anzeige des Mobilfunktelefons und ist daher wenig komfortabel.

Demzufolge liegt der vorliegenden Erfindung die Aufgabe zugrunde, ein rechnergesteuertes Vermittlungssystem für die Telefon- und/oder Datenkommunikation dahingehend weiterzubilden, daß das Steuern und Nutzen von verschiedensten Leistungsmerkmalen des Vermittlungssystems flexibler erfolgen kann, sowie ein Verfahren zur Steuerung und Nutzung von Leistungsmerkmalen des rechnergesteuerten Vermittlungssystems aufzuzeigen.

Diese Aufgabe wird durch ein Vermittlungssystem nach Patentanspruch 1 bzw. durch ein Verfahren nach Patentanspruch 3 gelöst.

Ein wesentlicher Punkt der Erfindung liegt darin, daß das rechnergesteuerte Vermittlungssystem eine Schnittstelle aufweist, die derart ausgestaltet ist, daß sie eine Nachrichtenübermittlung zwischen dem Vermittlungssystem und dem Kommunikationsendgerät durch Sprachübertragung erlaubt. Durch das Erkennen von Sprachdaten in dem Vermittlungssystem und deren Umwandlung in Steuerinformationsdaten/Leistungsmerkmalsdaten ist eine schnelle und einfache Kommunikation zwischen dem Teilnehmer und dem Vermittlungssystem, beispielsweise eine PABX-Anlage, möglich. Dadurch können Daten, wie beispielsweise Konfigurationsparameter oder Teilnehmerdaten, die in einem Speicher der PABX-Anlage abgespeichert sind, in kürzester Zeit dem Teilnehmer angesagt werden. Dies ermöglicht die schnelle Nutzung eines Leistungsmerkmals durch den Teilnehmer. Der Teilnehmer kann somit z. B. in kurzer Zeit und auf komfortable Weise eine Rufumleitung zu einem Endgerät eines anderen Teilnehmers einstellen, wenn er sich von seinem Arbeitsplatz entfernen mußte und zuvor vergessen hat, eine dementsprechende Rufumleitung einzurichten.

Durch die erfindungsgemäße Anpassung der Schnittstelle in der Art, daß diese den Zugriff auf den Speicher mit Steuerinformationsdaten/Leistungsmerkmalsdaten mittels einer Sprachübertragung ermöglicht, wird dem Teilnehmer eine große Flexibilität in der Nutzung und Steuerung von Leistungsmerkmalen einer PABX-Anlage aufgrund der Ortsunabhängigkeit gegeben. Insbesondere, aber nicht ausschließlich, ist das erfindungsgemäße Vermittlungssystem mit der darin enthaltenen Schnittstelle für eine drahtlose Kommunikation mit einem Teilnehmer vorteilhaft. Die Nutzung eines Mobiltelefons gibt dem Teilnehmer eine-maximale Flexibilität in der Kommunikation mit der PABX. Aber auch eine Kommunikation über das öffentliche Telefonfestnetz, unabhängig davon, ob es sich um eine analoge oder digitale Amtsleitung handelt, ist von einem fern dem Vermittlungssystem angeordneten Endgerät möglich. Zudem ist die Steuerung und Nutzung der Leistungsmerkmale mittels PC via Internet möglich.

Zur Kommunikation mit dem externen Kommunikationsendgerät weist das Vermittlungssystem einen virtuellen, lokal angeordneten Teilnehmer auf, dessen Aufgabe darin besteht, nach Etablierung der Kommunikationsverbindung mit dem Kommunikationsendgerät des Teilnehmers das Verändern von Daten (Parametern), die einem Leistungsmerkmal zugeordnet sind, zu erlauben oder das gewünschte Leistungsmerkmal zu nutzen. Dem virtuellen Teilnehmer wird hierfür eine eindeutige Rufnummer zugeordnet, die den virtuellen Teilnehmer zu einem fiktiven Endgerät, das an das Vermittlungssystem angeschlossen ist, werden läßt.

Die Instanz des virtuellen Teilnehmers ermöglicht einen sprachgesteuerten und/oder softwarebasierten Zugriff auf alle Daten, die in dem Speicher abgespeichert sind. Diese Daten werden, sofern sie zu dem externen Kommunikationsendgerät übertragen werden sollen, mit Hilfe einer Umwandlungseinrichtung in Sprachdaten umgewandelt. Diese Sprachdaten werden dann über die bestehende analoge oder ISDN-Sprachverbindungsleitung in einem B-Kanal an das externe Endgerät gesendet. Durch die Einrichtung eines derartigen virtuellen Teilnehmers, der Teil der Schnittstelle ist, wird zusammen mit einem proprietären Übertragungsprotokoll und Umwandlungseinrichtungen die Ein- und/oder Ausgabe von Sprachdaten, die den Leistungsmerkmalsdaten entsprechen, ermöglicht. Der Teilnehmer kann somit auf einfache Weise mit dem Vermittlungssystem kommunizieren, während er seine Hände für weitere Tätigkeiten zur Verfügung hat.

In einer bevorzugten Ausführungsform des erfindungsgemäßen Verfahrens findet die Nachrichtenübermittlung per Sprachübertragung nicht nur von dem Vermittlungssystem zu dem externen Kommunikationsendgerät, sondern auch von dem Kommunikationsendgerät zu dem Vermittlungssystem statt. Hierfür werden die von dem Kommunikationsendgerät gesendeten Sprachdaten in einer Empfangseinrichtung des Vermittlungssystems empfangen und mittels einer Umwandlungseinrichtung in Steuerinformationsdaten umgewandelt, um so Daten zu erhalten, mittels derer ein Zugriff auf die in dem Speicher abgespeicherten Leistungsmerkmalsdaten ermöglicht wird. Somit ist eine zweiseitige Nachrichtenübermittlung per Sprachübertragung zwischen dem Vermittlungssystem und dem Kommunikationsendgerät möglich, wodurch eine schnelle und flexible Nutzung von Leistungsmerkmalen oder Veränderung und/oder das Abfragen von Leistungsmerkmalsdaten erfolgen kann.

Weitere Ausführungsformen der Erfindung ergeben sich aus den Unteransprüchen. Nachfolgend wird die Erfindung anhand von Ausführungsbeispielen beschrieben, die anhand der Abbildungen näher erläutert werden. Hierbei zeigen:
- Fig. 1: eine erste Ausführungsform der Erfindung und
- Fig. 2: eine weitere Ausführungsform der Erfindung.

In der nachfolgenden Beschreibung werden für gleiche und gleich wirkende Teile dieselben Bezugsziffern verwendet.

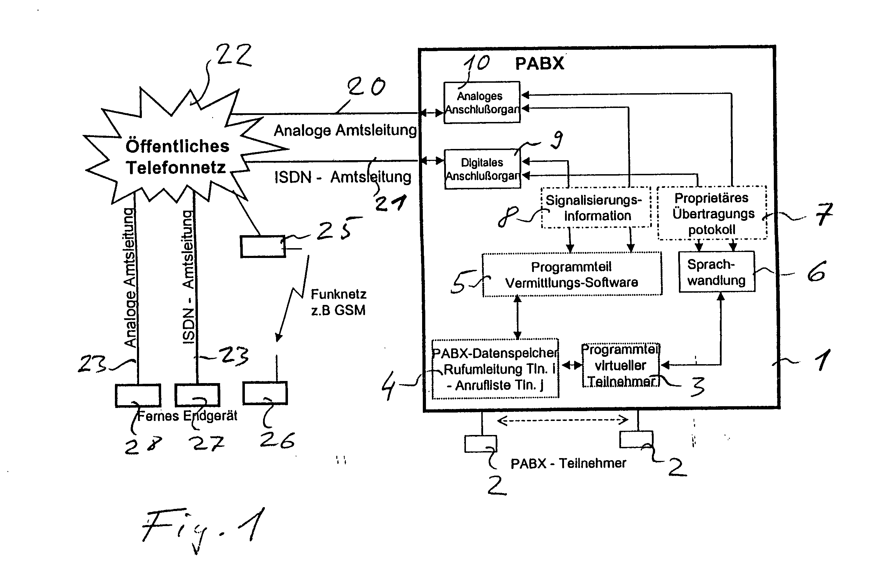

Fig. 1 zeigt eine erste Ausführungsform der Erfindung, in der ein rechnergestütztes Vermittlungssystem 1 mit damit verbundenem Kommunikationsendgeräten 2, die von PABX-Teilnehmern bedient werden, dargestellt wird. Die PABX-Anlage 1 ist über eine analoge und eine ISDN-Amtsleitung 20, 21 mit dem öffentlichen Telefonnetz 22 verbunden, an welches wiederum über analoge und ISDN-Amtsleitungen 23 externe Kommunikationsendgeräte 27, 28, wie beispielsweise ein analoges Telefon, ein ISDN-Telefon oder ein Personalcomputer angeschlossen sind. Auch ein drahtloser Anschluß eines Mobilfunkgerätes 26 über eine Vermittlungsstelle 25 ist dargestellt.

Zum Anschluß der analogen und der ISDN-Amtsleitung 20, 21 weist die PABX-Anlage analoge und digitale Anschlußeinrichtungen 9, 10 auf, welche mit einer Einrichtung 5 verbunden sind, die mittels einer Vermittlungs-Software und der übertragenen Signalisierungsinformation 8 die Verbindung zu einem Speicher 4, der die Leistungsmerkmalsdaten der PABX-Anlage beinhaltet, aufbaut oder nicht aufbaut.

Mit Hilfe eines proprietären Übertragungsprotokolls 7 werden in einer Umwandlungseinrichtung 6, die mit den Anschlußeinrichtungen 9 und 10 verbunden ist, die Sprachdaten, welche von einem der externen Kommunikationsendgeräte 26 - 28 über das öffentliche Netz in das Vermittlungssystem eingehen, in Steuerinformationsdaten/Leistungsmerkmalsdaten (Parameter) umgewandelt.

Anschließend werden die Steuerinformationsdaten einem virtuellen Teilnehmer 3 zugeordnet, dessen Aufgabe darin besteht, nach der zustandegekommenen Verbindung mit dem externen Endgerät durch Spracheingabe und Sprachausgabe die Manipulation von Parametern einzelner Leistungsmerkmale, die in dem Speicher abgespeichert sind, zu erlauben und/oder das gewünschte Leistungsmerkmal zu nutzen. Der Teilnehmer des Endgerätes 26 - 28 steht also im ständigen Kontakt mit dem virtuellen Teilnehmer 3, um so das Verändern und/oder Abfragen von Leistungsmerkmalsdaten oder das Nutzen von Leistungsmerkmalen zu erreichen. Hierfür kann die Umwandlungseinrichtung 6 auch zum Umwandeln von Steuerinformationsdaten/Leistungsmerkmalsdaten in Sprachdaten geeignet sein.

Das für die Kommunikation zwischen einem der externen Endgeräte 26 - 28 und dem virtuellen Teilnehmer 3 wichtige proprietäre Übertragungsprotokoll 7 zur Übertragung der hin- und hergehenden Daten führt u. a. folgende Schritte durch:

Zu Anfang wird der anrufende Kommunikationsteilnehmer beispielsweise durch ein Paßwort oder durch eine Einrichtung zur Stimmenerkennung identifiziert. Nachdem dann der anrufende Teilnehmer per Spracheingabe die gewünschten Durchführungsschritte dem Vermittlungssystem mitgeteilt hat, kennzeichnet das Übertragungsprotokoll das Leistungsmerkmal, auf dessen Daten zugegriffen werden soll, oder die Leistungsmerkmalsdaten, auf die zugegriffen werden soll oder die Aktion (Abfragen, Verändern), die mit den Leistungsmerkmalsdaten durchzuführen ist.

Sobald eine solche Aktion durchgeführt worden ist, zeigt das Übertragungsprotokoll eine erfolgreiche oder nicht erfolgreiche Durchführung mittels Sprachausgabe an.

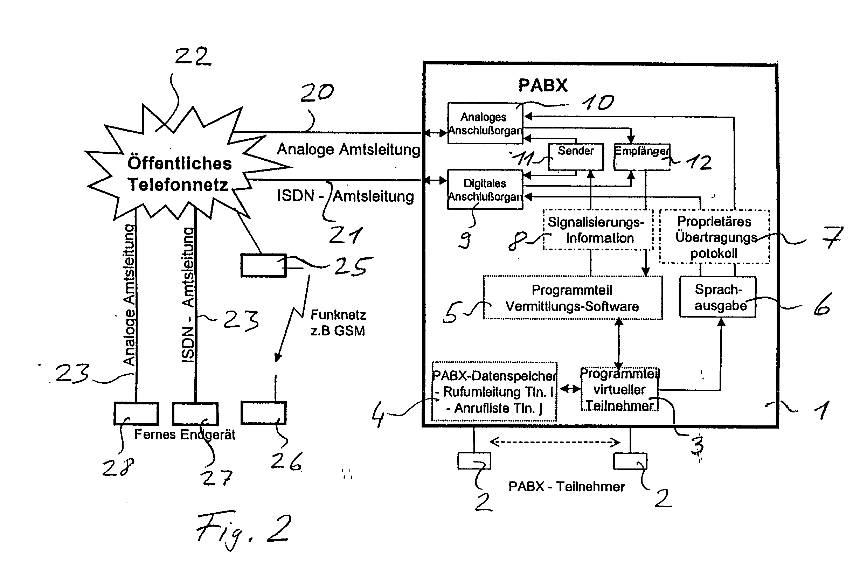

Die in Fig. 2 dargestellte Konfiguration unterscheidet sich von derjenigen aus Fig. 1 dahingehend, daß die Kommunikation mit dem externen Kommunikationsgerät per Sprachausgabe, jedoch nicht per Spracheingabe stattfindet. Eine Dateneingabe durch den Teilnehmer kann beispielsweise durch Eingabe einer bestimmten MFV-Zeichenfolge stattfinden. Eine Antwort der PABX wird, wie in der in Fig. 1 dargestellten Ausführungsform, per Sprachsynthese ausgegeben. Hierfür wandelt eine Umwandlungseinrichtung 6 Leistungsmerkmalsdaten und/oder Steuerinformationsdaten in Sprachdaten zur Ausgabe an den Teilnehmer mit dem externen Kommunikationsendgerät um.

Zusätzlich ist in der in Fig. 2 dargestellten PABX-Anlage eine Empfangseinrichtung 12 zum Empfangen von Signalisierungsdaten mittels eines In-Band-Signalisierungsverfahrens angeordnet. Die von dem externen Kommunikationsendgerät gesendeten Signalisierungsdaten werden also im gleichen Kanal wie die Nutzdaten in periodischen Abständen übertragen. Desweiteren ist eine Sendeeinrichtung 11 zum Senden von Signalisierungsdaten angeordnet, wobei die Signalisierungsdaten auf Nutzdaten (z. B. Leistungsmerkmalsdaten), welche von dem virtuellen Teilnehmer 3 aus dem Speicher 4 ausgelesen werden, abgestimmt werden. Eine solche Abstimmung bezieht sich beispielsweise auf die Verwendung der gleichen Frequenz bei den Signalisierungs- und den Nutzdaten. Der Informationsaustausch zwischen der Sende- bzw. Empfangseinrichtung 11 und 12 und dem virtuellen Teilnehmer 3 findet über die Einrichtung 5, welche eine Vermittlungssoftware beinhaltet, statt.

In beiden in den Figuren dargestellten Vermittlungssystemen kann der Zugriff auf den Speicher 4 von verschiedenen Personenkreisen genutzt werden. Hierbei kann es sich zum einen um jeden der Teilnehmer am Vermittlungssystem PABX handeln, die den Zugriff zur Abfrage und Änderung teilnehmerindividueller Daten und Einstellungen (z. B. Anrufliste, Rufumleitung, individuelles Telefonbuch) nutzen. Weiterhin kann jeder Teilnehmer allgemeine Daten und Einstellungen abfragen (z. B. das allgemeine PABX-Telefonbuch). Desweiteren kann ein Administrator für das PABX-Vermittlungssystem zur Abfrage und Änderung teilnehmerindividueller Daten und Einstellung sowie zur Abfrage und Änderung allgemeiner Daten und Einstellungen (z. B. Teilnehmerberechtigung, Ändern des allgemeinen Telefonbuches) zugreifen. Schließlich kann auch Service- und Wartungspersonal des Herstellers oder Betreibers des Vermittlungssystems 1 zur Abfrage und Änderung aller Daten einschließlich der Konfigurations- und Servicedaten auf den Speicher 4 zugreifen.

Nachfolgend werden einige Anwendungsbeispiele des erfindungsgemäßen Vermittlungssystems dargestellt:
1. Ein Teilnehmer fragt mit seinem externen Kommunikationsendgerät die Anrufliste eines Teilnehmers der PABX-Anlage ab und läßt sich die Anruflisteneinträge mittels Sprachausgabe an. sein entfernt liegendes externes Kommunikationsendgerät übertragen. Anschließend kann er von diesem Endgerät aus einen gezielten Rückruf an einen in der Anrufliste aufgelisteten Anrufer tätigen.
2. Der Teilnehmer fragt mit seinem externen Kommunikationsgerät sein persönliches Telefonbuch und/oder das allgemeine Telefonbuch der PABX-Anlage oder eines PABX-Netzwerkes per Spracheingabe ab und läßt sich die gesuchte Rufnummer bzw. den gesuchten Namen durch Sprachausgabe an sein Endgerät ansagen, so daß er anschließend von diesem Endgerät die gesuchte Rufnummer anrufen kann.
3. Persönliche und/oder allgemeine Einstellungen (Parameter/Daten) der PABX-Anlage bzw. des PABX-Netzwerkes werden durch den Teilnehmer mit dem externen Kommunikationsendgerät abgefragt, und durch Sprachausgabe werden die abgefragten Einstellungen, z. B. für die Rufumleitung, an das fernliegende Endgerät übertragen.
4. Nachdem derartige Einstellungen von dem Teilnehmer geändert wurden, kann die Nutzung eines Leistungsmerkmals darin bestehen, daß der Teilnehmer sich lediglich die neuen persönlichen und/oder allgemeinen Einstellungen durch Sprachausgabe ansagen läßt.
5. Durch automatischen Aufbau einer Gesprächsverbindung von der PABX-Anlage zu einem vorbestimmten Kommunikationsendgerät und eine entsprechende Ansage kann der Teilnehmer mit dem externen Kommunikationsendgerät über Ereignisse benachrichtigt werden, die in der PABX-Anlage oder in dem PABX-Netzwerk aufgetreten sind.

An dieser Stelle sei darauf hingewiesen, daß alle oben beschriebenen Teile für sich allein gesehen und in jeder Kombination, insbesondere die in den Zeichnungen dargestellten Details als erfindungswesentlich beansprucht werden. Abänderungen hiervon sind dem Fachmann geläufig.

### Bezugszeichenliste

- 1: PABX-Anlage
- 2: PABX-Teilnehmer mit Endgeräten
- 3: virtueller Teilnehmer
- 4: PABX-Datenspeicher
- 5: Einrichtung mit Programmteil Vermittlungssoftware
- 6: Umwandlungseinrichtung
- 7: proprietäres Übertragungsprotokoll
- 8: Signalisierungsinformation
- 9, 10: Anschlußeinrichtungen
- 11: Sendeeinrichtung
- 12: Empfangseinrichtung
- 20: analoge Amtsleitung
- 21: ISDN-Amtsleitung
- 22: öffentliches Netz
- 23: analoge und ISDN-Amtsleitung
- 25: Mobilfunkvermittlungsstelle
- 26: Mobilfunkgerät
- 27, 28: Festnetzendgerät

## Patentansprüche

1. Rechnergestütztes Vermittlungssystem (1) für Telefon- und Datenkommunikation mit Leistungsmerkmalen, zu deren Steuerung und/oder Nutzung ein außerhalb des Vermittlungssystems angeordnetes Kommunikationsendgerät (26 - 28) auf in einem Speicher (4) abgespeicherte Steuerinformationsdaten und/oder Leistungsmerkmalsdaten zugreift, und mit einer Schnittstelle (3, 6, 7) zum Zugriff auf diese durch das Kommunikationsendgerät (26 - 28),
**dadurch gekennzeichnet, daß**
die Schnittstelle (3, 6, 7) Einrichtungen für eine Nachrichtenübermittlung zu und/oder von dem Kommunikationsendgerät (26 - 28) durch Sprachübertragung beinhaltet.

2. Vermittlungssystem nach Anspruch 1,
**dadurch gekennzeichnet, daß**
die Einrichtungen für die Kommunikation durch Sprachübertragung einen virtuellen Teilnehmer (3), Einrichtungen (6) zum Umwandeln von Sprachdaten in Steuerinformationsdaten/Leistungsmerkmalsdaten und/oder Einrichtungen (6) zum Umwandeln von Steuerinformationsdaten/Leistungsmerkmalsdaten in Sprachdaten sowie Einrichtungen (11, 12) zum Senden und/oder Empfangen von Signalisierungsinformationsdaten umfaßt.

3. Verfahren zur Steuerung und/oder Nutzung von Leistungsmerkmalen eines rechnergesteuerten Vermittlungssystems (1) nach Anspruch 1 durch ein außerhalb des Vermittlungssystems (1) angeordnetes Kommunikationsendgerät (26 - 28), welches auf in einem Speicher (4) gespeicherte Steuerinformationsdaten und/oder Leistungsmerkmalsdaten zugreift,
**dadurch gekennzeichnet, daß**
eine Nachrichtenübermittlung zu und/oder von dem Kommunikationsendgerät (26 - 28) durch Sprachübertragung erfolgt.

4. Verfahren nach Anspruch 3,
**dadurch gekennzeichnet, daß**
die Kommunikation durch Sprachübertragung die Schritte umfaßt:
- Verbindungsaufbau zwischen dem Kommunikationsendgerät und einem im Verbindungssystem (1) angeordneten virtuellen Teilnehmer (3),
- Zugreifen auf die in dem Speicher gespeicherten Steuerinformationsdaten und/oder Leistungsmerkmalsdaten durch das Kommunikationsendgerät (26 - 28) über den virtuellen Teilnehmer (3) mittels eines proprietären Übertragungsprotokolls (7),
- Verändern, Abfragen und/oder Anwenden der Steuerinformationsdaten und/oder Leistungsmerkmalsdaten durch das Kommunikationsendgerät (26 - 28),
- Umwandeln der Steuerinformationsdaten und/oder Leistungsmerkmalsdaten in Sprachdaten mittels einer Umwandlungseinrichtung (6), und
- Senden der Sprachdaten an das Kommunikationsendgerät (26 - 28) mittels einer Sendeeinrichtung.

5. Verfahren nach Anspruch 3 oder 4,
**gekennzeichnet durch**
die Schritte des Empfangens von **durch** das Kommunikationsendgerät (26 - 28) gesendeten Sprachdaten und des Umwandelns der Sprachdaten in Steuerinformationsdaten und/oder Leistungsmerkmalsdaten mittels der Umwandlungseinrichtung (6).

6. Verfahren nach einem der Ansprüche 3 bis 5, insbesondere nach Anspruch 5,
**dadurch gekennzeichnet, daß**
das Übertragungsprotokoll (7) einen oder mehrere der folgenden Schritte durchführt:
- Identifizieren des Kommunikationsendgerätes (26 - 28),
- Kennzeichnen der Steuerinformationsdaten/Leistungsmerkmalsdaten und/oder des Leistungsmerkmals, auf welche(s) durch das Kommunikationsendgerät (26 - 28) zugegriffen wird,
- Durchführen von Veränderungen und/oder Abfragen von Steuerinformationsdaten und/oder Leistungsmerkmalsdaten, und
- Anzeigen des erfolgreich durchgeführten Veränderns und/oder Abfragens von Steuerinformationsdaten und/oder Leistungsmerkmalsdaten sowie einer erfolgreich durchgeführten Steuerung und/oder Nutzung des Leistungsmerkmals.
